# EUROPEAN PATENT APPLICATION

(11) **EP 1 085 734 A2**
(43) Date of publication of application: **21.03.2001**
(21) Application number: 00112942.8
(22) Date of filing: 20.06.2000
(51) Int. Cl.: H04M 7/00

(54) **Internet telephony system and method using public telephone network terminal adapters**

(30) Priority: 09.09.1999 KR 9938367; 11.04.2000 KR 0019012; 29.04.2000 KR 0023166
(71) Applicant: Han, Tae Hee, Pusan-shi 612-010 (KR)
(72) Inventor: Han, Tae Hee, B-206 Haeyeon Villa, Haeundae-ku, Pusan-shi 612-010 (KR); Min, Young Tae, Hanil-Narae Apt., 201-1109, Uiwang-shi, Kyonggi-do 437-831 (KR)
(74) Representative: Bosotti, Luciano

(57) **Abstract**

Disclosed are an Internet telephony system and method for implementing telephone-to-telephone Internet telephony services using PSTN or ISDN terminal adapters. The system includes an origination terminal adapter (TA) for performing an Internet telephony drive operation in response to a calling request, transmitting Internet telephony connection information, and establishing a voice channel with a destination TA, based on Internet telephony Connection information from the destination TA in response to a connection signal from the destination TA, an Internet telephony server for searching for a connection of the destination TA to the Internet in response to the calling request and the transmission of the Internet telephony connection information from the origination TA, requesting, via a public telephone network, the destination TA to execute an Internet telephony drive operation according to the result of the search, and transmitting the Internet telephony connection information from the destination TA to the origination TA, and the destination TA for executing its Internet telephony drive operation in response to an incoming call from the server transmitted via the public telephone network while transmitting its Internet telephony connection information. The destination TA establishes the voice channel with the origination TA in response to a connection acknowledgement signal received from the origination TA.

## Description

### BACKGROUND OF THE INVENTION

### Field of the Invention

The present invention relates to an Internet telephony system, and more particularly to an Internet telephony system and method for implementing telephone-to-telephone Internet telephony services using public telephone network terminal adapters such as public switched telephone network (PSTN) terminal adapters or integrated services digital network (ISDN) terminal adapters.

### Description of the Prior Art

Telephony services via the Internet, that is, Internet telephony services, are mainly implemented in accordance with two schemes.

The first scheme is an Internet telephony method in which telephony services are conducted between computers using Internet telephony programs respectively stored in those computers. The second scheme is an internet telephony method in which telephony services are conducted between telephones using a voice channel established between those telephones.

However, those Internet telephony methods conventionally implemented have various problems in that there is an inconvenience in use and a complexity in manipulation.

That is, the first Internet telephony method, which provides Internet telephony services between personal computers, basically requires use of additional equipment such as personal computers of a high performance and sound cards for enabling an implementation of voice communication. Such a use of additional equipment results in an increase in the costs. Furthermore, it is difficult to establish a required voice channel due to intrinsic characteristics of the Internet. In other words, in order to receive a call made from a call originator, the destination should always be in a state connected to the Internet. Even under this condition, it is also necessary for the originator and destination to exchange information about their IP addresses. However, it is difficult to establish such conditions. For this reason, there is a problem in that it is difficult to always establish a desired voice channel. In addition, the application programs respectively used in the originating and destination personal computers for Internet telephony services should be compatible with each other.

In the second Internet telephony method for providing telephony services between telephones, a particular service provider capable of providing desired Internet telephony services should be designated. Furthermore, there is a considerable increase in the costs because the users should pay a considerably high charge for using Internet telephony services through the service provider. In addition, there are various inconveniences in use, as compared to the conventional telephony services using general telephones. For instance, the users should additionally input identification numbers respectively allocated for Internet telephony services through the particular service provider. Also, the service provider should be equipped with an exclusive server for Internet telephones and equipment for allowing general telephones to receive calls from the Internet telephony server. To this end, it is also necessary to construct an appropriate network infrastructure for processing a large amount of voice data in real time. As a result, there is a problem in that an increase in the service implementing costs occurs.

Another Internet telephony method has been proposed in which telephony services are conducted between a personal computer and a telephone. In accordance with this method, however, it is necessary to construct a network using gateway devices. Furthermore, the network constructing costs increase because the gateway devices are expensive. As a result, the users and service provider are burden with increased costs.

The above mentioned problems may result from the fact that Internet telephony services are not based on the line switching operation in general telephony communications, but based on the packet data switching operation. Nevertheless, the necessity of Internet telephony services is being greatly raised by virtue of various effects, for example, a cost reduction effect, expected by the Internet telephony services.

In any case, conventional Internet telephony methods involve various inconveniences in use at the origination user. Also, it is very difficult to connect a call to the destination user in real time in response to a calling request necessarily made by the origination user.

### SUMMARY OF THE INVENTION

Therefore, an object of the invention is to provide an Internet telephony system and method for implementing Internet telephony services using terminal adapters configured to interconnect a public telephone network with the Internet, which system and method are capable of allowing those terminal adapters to be used in such a fashion that a destination one of those terminal adapters responds, in real time, to a call attempt requested by an origination one of the terminal adapters and conducted via the Internet, and allowing the origination terminal adapter to conduct, in real time, voice communications with the destination terminal adapter in response to the response of the destination terminal adapter, thereby giving an enhanced convenience to users.

In accordance with one aspect, the present invention provides an Internet telephony system using an integrated services digital network (ISDN) comprising: an origination terminal adapter for performing an Internet telephony drive operation in response to a calling request by a user, and transmitting Internet telephony connection information in accordance with the executed Internet telephony drive operation, the origination terminal adapter serving to establish a voice channel with a destination terminal adapter, based on Internet telephony connection information transmitted from the destination terminal adapter in response to the transmission of the Internet telephony connection information from the origination terminal adapter, in a state in which a connection signal from the destination terminal adapter is received by the origination terminal adapter; an Internet telephony server for searching for a connection of the destination terminal adapter to the Internet in response to the calling request from the origination terminal adapter and the transmission of the Internet telephony connection information from the origination terminal adapter, requesting, via a public telephone network, the destination terminal adapter to execute an Internet telephony drive operation in accordance with the result of the search, and transmitting the Internet telephony connection information from the destination terminal adapter to the origination terminal adapter in accordance with an execution of the Internet telephony drive operation by the destination terminal adapter; and the destination terminal adapter for executing the Internet telephony drive operation thereof in response to an incoming call from the Internet telephony server transmitted thereto via the public telephone network in accordance with the request for Internet telephony drive operation while transmitting the Internet telephony connection information thereof in accordance with the executed Internet telephony drive operation thereof, the destination terminal adapter serving to establish the voice channel with the origination terminal adapter, based on the Internet telephony connection information transmitted thereto in response to the transmission of the Internet telephony connection information from the destination terminal adapter, in a state in which a connection acknowledgement signal from the origination terminal adapter is received by the destination terminal adapter.

In accordance with another aspect, the present invention provides an Internet telephony method in an Internet telephony system including origination and destination terminal adapters connectable to each other via the Internet in accordance with Internet telephony drive operations thereof, and an Internet telephony server adapted to arbitrate connection of a voice channel between the origination and destination terminal adapters, comprising the steps of: (A) controlling the origination terminal adapter to execute the Internet telephony drive operation thereof in response to a calling request by a user, and to transmit Internet telephony connection information in accordance with the Internet telephony drive operation; (B) controlling the Internet telephony server to search for a connection of the destination terminal adapter to the Internet in response to the calling request from the origination terminal adapter and the transmission of the Internet telephony connection information from the origination terminal adapter, and to request, via a public telephone network, the destination terminal adapter to execute an Internet telephony drive operation in accordance with the result of the search; (C) controlling the destination terminal adapter to execute the Internet telephony drive operation thereof in response to an incoming call from the Internet telephony server transmitted thereto via the public telephone network in accordance with the request for Internet telephony drive operation, and to transmit Internet telephony connection information in accordance with the executed Internet telephony drive operation thereof; and (D) controlling both the origination and destination terminal adapters to establish a voice channel therebetween, based on the Internet telephony connection information exchanged therebetween in accordance with an arbitration of the Internet telephony server, when connection signals are exchanged between the origination and destination terminal adapters in accordance with the arbitration of the Internet telephony server.

### BRIEF DESCRIPTION OF THE DRAWINGS

The above objects, and other features and advantages of the present invention will become more apparent after a reading of the following detailed description when taken in conjunction with the drawings, in which:
Fig. 1 is a block diagram illustrating an Internet telephony system using the Internet in accordance with a preferred embodiment of the present invention.
Fig. 2a is a flow chart illustrating an operation of the Internet telephony system using the Internet in accordance with an embodiment of the present invention;
Fig. 2b is a flow chart illustrating an operation of the Internet telephony system using the Internet in accordance with another embodiment of the present invention;
Figs. 3a, 3b and 3c are flow charts illustrating respective control procedures for an origination terminal adapter, an Internet telephony server, and a destination terminal adapter in association with the operation shown in Fig. 2a;
Figs. 4a, 4b and 4c are flow charts illustrating respective control procedures for the origination terminal adapter, the Internet telephony server, and the destination terminal adapter in association with the operation shown in Fig. 2b;
Fig. 5 is a block diagram illustrating an internal configuration of each terminal adapter conducting Internet telephony services in accordance with a preferred embodiment of the present invention; and
Fig. 6 is a block diagram illustrating an internal configuration of the Internet telephony server conducting Internet telephony services in accordance with a preferred embodiment of the present invention.

### DESCRIPTION OF THE PREFERRED EMBODIMENTS

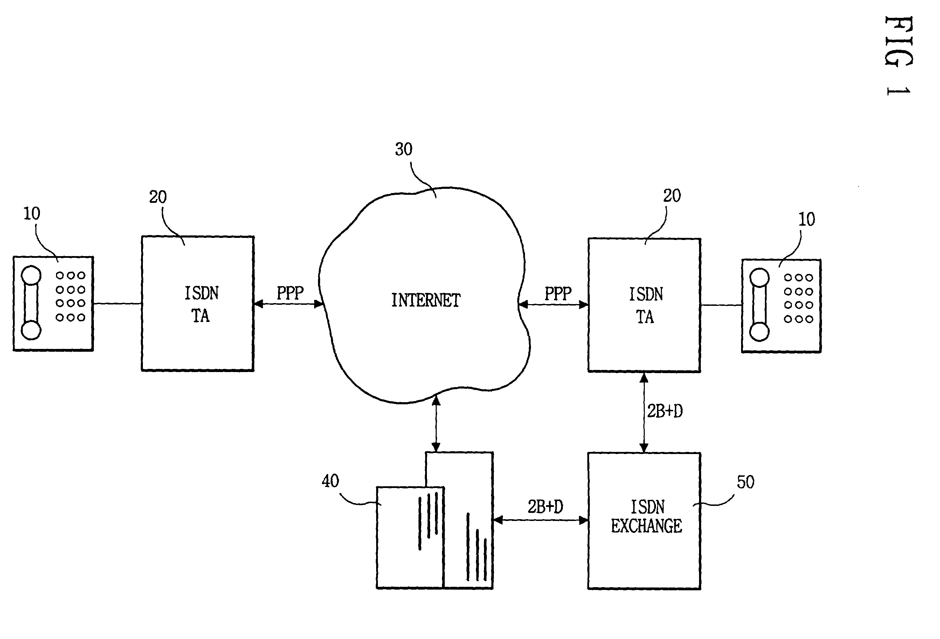

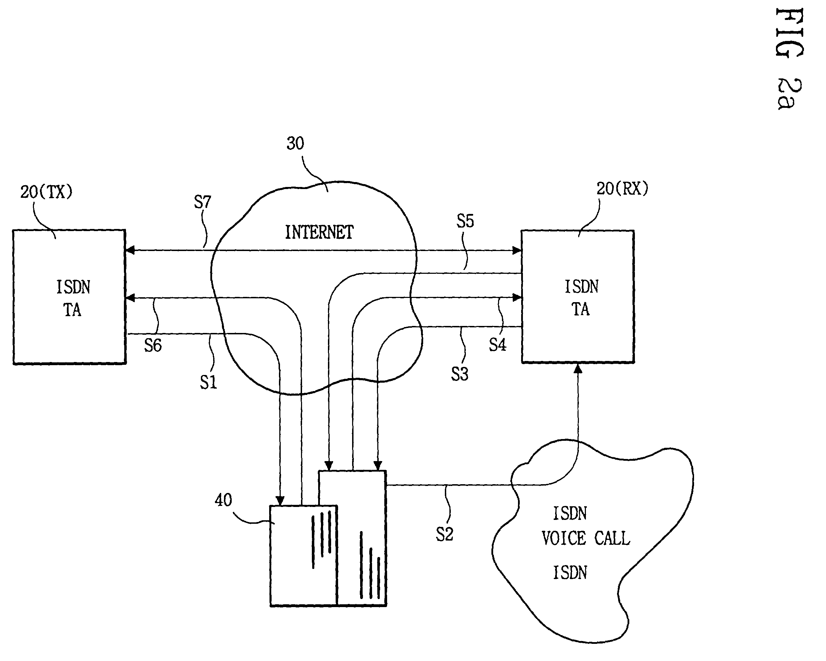

Fig. 1 is a block diagram illustrating an Internet telephony system using the Internet in accordance with a preferred embodiment of the present invention.

Terminal adapters included in the Internet telephony system according to the preferred embodiment of the present invention and adapted to connect a public telephone network to the Internet have features in that they comply with the H.323 Standard proposed by International Telecommunication Union (ITU) and can be used in a state attached to general telephones. The public telephone network may be a PSTN or an ISDN. In accordance with a preferred embodiment of the present invention, each terminal adapter is an ISDN terminal adapter. In the case of the ISDN terminal adapter, it carries out operations for telecommunication and data transmission via an ISDN. In accordance with a preferred embodiment of the present invention, an Internet telephony server is also used which supports a function as a gate keeper and a processing for calls associated with Internet telephony services depending on whether or not the destination terminal adapter is connected to the Internet. In accordance with a preferred embodiment of the present invention, no gateway or personal computer is used, so that it is possible to provide inexpensive and easily usable Internet telephony services. In accordance with a preferred embodiment of the present invention, the gate keeper may be internally implemented within the Internet telephony server. Alternatively, the gate keeper may be externally implemented using a separate external device. Meanwhile, basic techniques used for Internet telephony services comply with the ITU H.323 Standard or the SIP scheme proposed by IETF. In particular, the Internet telephony services complying with the H.323 Standard are widely used, as compared to those complying with the IETF SIP scheme.

Now, the Internet telephony system according to the preferred embodiment of the present invention will be described with reference to Fig. 1. As shown in Fig. 1, the Internet telephony system includes telephones 10 each connected to another telephone 10 via the public telephone network and Internet and adapted to conduct voice communications therebetween. The Internet telephony system also includes terminal adapter 20 each adapted to interface an associated one of the telephones 10 with the Internet in such a fashion that the associated telephone 10 can conduct voice communications via the Internet. In accordance with a preferred embodiment of the present invention, the public telephone network is an ISDN, and the terminal adapters 20 are ISDN terminal adapters. These ISDN terminal adapters construct a network, that is, the Internet, denoted by the reference numeral 30 in Fig. 1 and adapted to allow any terminal adapters to be freely connected thereto for data transmission and network services for a number of computers. The Internet telephony system further includes an Internet telephony server 40 maintained in a state connected to the Internet 30 while having an intrinsic IP address for the connection to the Internet 30. The Internet telephony server 40 functions to manage and process Internet telephony services. For example, the Internet telephony server 40 simultaneously conducts user identification and authorization, call routing, charging, and a conversion between the telephone number and the IP address. These functions are generally referred to as gate keeper functions.

The configuration of the Internet telephony system according to the preferred embodiment of the present invention will be described in more detail. Each telephone 10 is a means used by the user for direct voice communications with the counterpart. The telephone 10 basically includes a transmitter, a receiver, a ring signal generator, and a DTMF tone generator. The user conducts use of the Internet telephony services according to the present invention, and selectively carries out voice communications via the ISDN or voice communications via the PSTN.

Each terminal adapter 20 is connected to the ISDN which is an integrated services digital network for providing information of various types, such as a voice type and a non-voice type, in an integrated fashion. For the connection to the ISDN, the terminal adapter 20 uses a D channel as a control channel while using a B channel as a traffic channel. The B channel includes two channels. Each terminal adapter 20 is also connected to the Internet 30 for the Internet telephony services according to the present invention. The connection of the terminal adapter 20 to the Internet 30 is achieved based on a PPP protocol. A drive program for the PPP protocol is stored in the ISDN terminal adapter 20.

In accordance with a preferred embodiment of the present invention, each terminal adapter 20 conducts an Internet telephony operation in response to a request for the generation of a call or in response to an incoming call with previously designated identification information associated with the driving of the Internet telephony operation. The terminal adapter 20 also transmits Internet connection information thereof and Internet connection information of the counterpart in accordance with the driving of the Internet telephony operation. The terminal adapter 20 then establishes a voice channel based on Internet telephony connection information of the counterpart received from the Internet telephony server 40 in response to the transmission of the Internet telephony connection information.

The Internet 30 is an open computer network to which any computer located at any place can freely have access. Using the Internet 30, Internet telephony services are implemented. The implementation of Internet telephony services is achieved using a technique so called "VoIP". This technique is adapted to provide, to a packet network, the same effect as a line network. In accordance with such a technique, it is possible to achieve a real-time-based communication.

The Internet telephony server 40 serves to arbitrate an interconnection between an origination terminal adapter and a destination terminal adapter for a request and execution of Internet telephony services. The arbitration of the Internet telephony server 40 is carried out though an exchange of telephone numbers and IP addresses between the origination and destination terminal adapters 20. In accordance with the present invention, the Internet telephony server 40 is operatively connected to an ISDN exchange 50. The Internet telephony server 40 and ISDN exchange 50 are connected to each other in accordance with an ISDN scheme. For example, The Internet telephony server 40 and ISDN exchange 50 are connected to each other in accordance with a 2B+D channel scheme. In accordance with an embodiment of the present invention, the Internet telephony server 40 is also connected to an ISDN in addition to the connection to the Internet 30. The ISDN exchange 50, to which a terminal adapter denoted by the reference numeral 20 in Fig. 1 is connected, serves to control establishment of a voice channel for the terminal adapter 20 along with establishment of a data channel. In accordance with an embodiment of the present invention, a PSTN exchange may be used in place of the ISDN exchange 50. In this case, PSTN terminal adapters will be used to conduct associated data and voice transmission services.

In accordance with the present invention, the Internet telephony server 40 receives a calling request, according to an Internet telephony drive operation, transmitted from an origination terminal adapter, along with Internet telephony connection information. Based on the received Internet telephony connection information, the Internet telephony server 40 searches information about registered IP addresses in order to determine whether or not there is a registered Internet telephony connection information corresponding to that of the destination terminal adapter. In accordance with the result of the search, the Internet telephony server 40 transmits a call and Internet telephony drive identification information, previously designated for a request of the Internet telephony drive operation of the destination terminal adapter, to the destination terminal adapter via the PSTN. Thereafter, the Internet telephony server 40 arbitrates establishment of a voice channel between the origination and destination terminal adapters using the Internet telephony connection information of the origination terminal adapter and the Internet telephony connection information of the destination terminal adapter performing an Internet telephony drive operation in response to the transmission of the Internet telephony drive identification information.

The Internet telephony connection information is address information for an Internet telephony connection between the origination and destination terminal adapters 20 via the Internet 30. The Internet telephony connection information basically includes telephone numbers corresponding to respective public network addresses of origination and destination terminal adapters, and IP addresses corresponding to respective Internet addresses of those terminal adapters. In accordance with an embodiment of the present invention, the Internet telephony connection information is registered in the Internet telephony server 40 and includes the telephone number of the destination terminal adapter in the case in which the origination terminal adapter 20 makes a call for Internet telephony services. For an Internet telephony operation according to the present invention, the Internet telephony server 40 searches for the Internet telephony connection information registered for the destination terminal adapter 20 therein, and transmits the IP addresses corresponding to respective telephone numbers of the origination and destination terminal adapters 20 to each other of those terminal adapters 20 in order to enable an Internet telephony connection.

The Internet telephony drive identification information used in accordance with the present invention is identification information used in the case in which the destination terminal adapter is in a state not connected to the Internet 30, so that there is no Internet connection information registered for the destination terminal adapter 20 in the Internet telephony server 40, in order to control the destination terminal adapter to perform a connection to the Internet 30 and to register its Internet telephony connection information in the Internet telephony server 40.

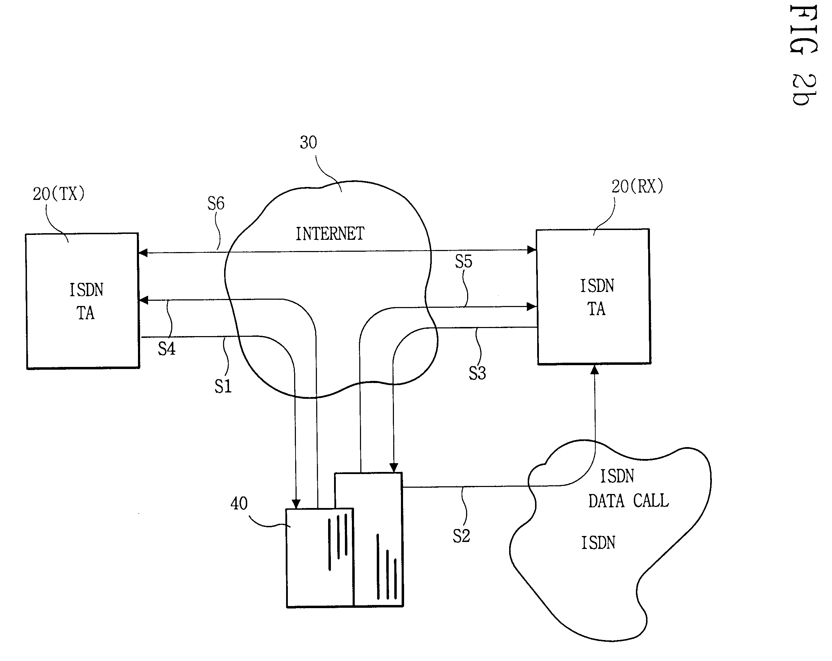

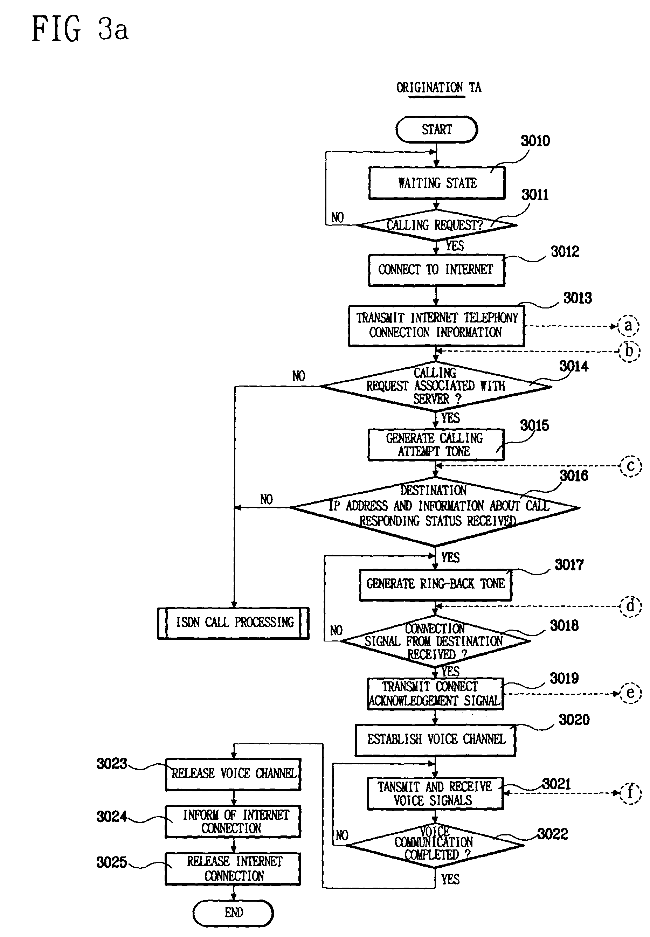

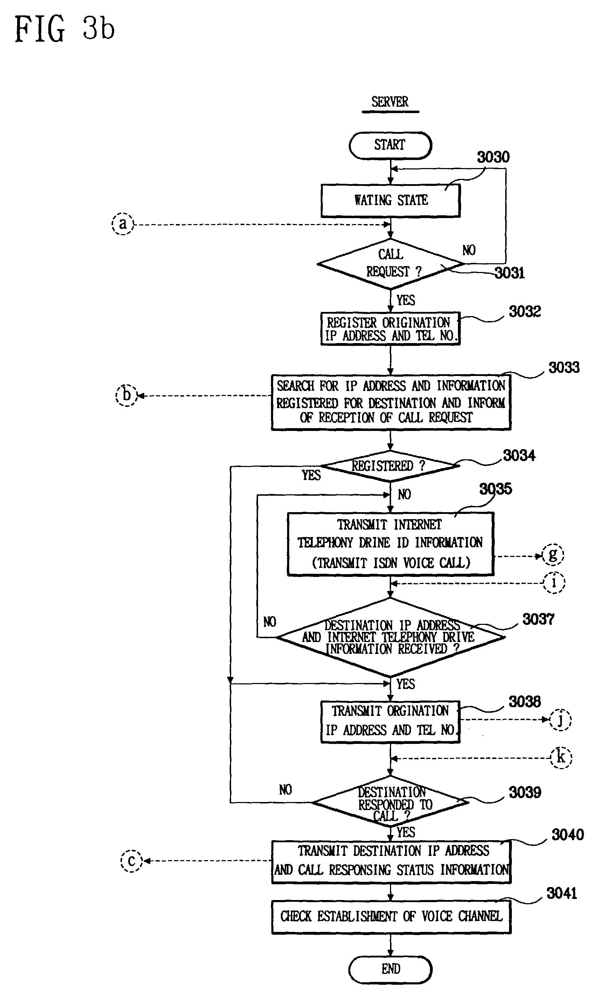

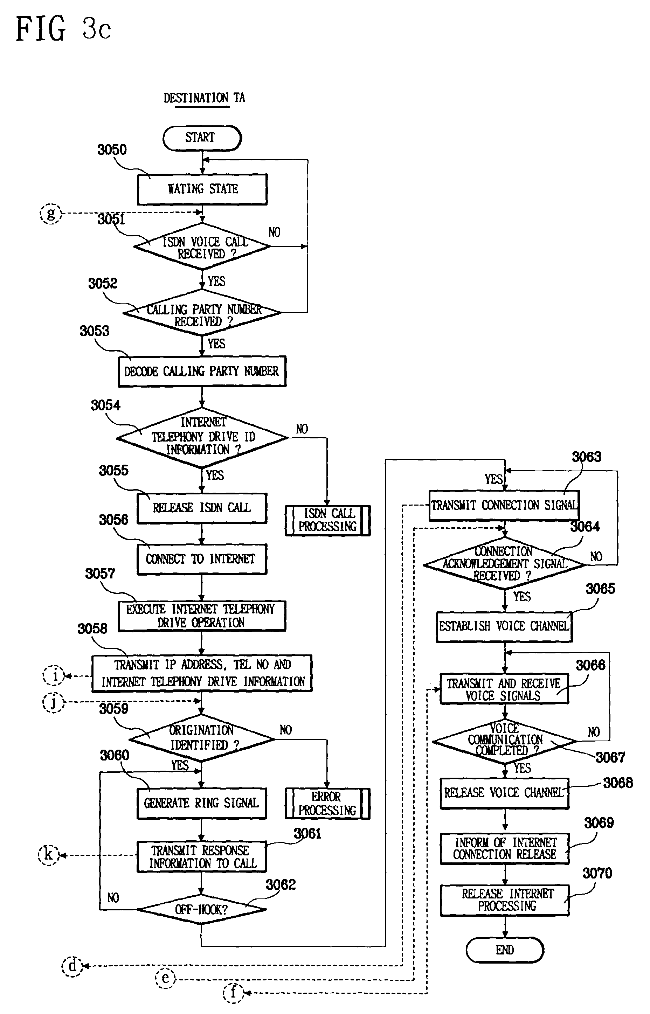

Fig. 2a is a flow chart illustrating an operation of the Internet telephony system using the Internet in accordance with an embodiment of the present invention. Figs. 3a, 3b and 3c are flow charts illustrating respective control procedures for the origination terminal adapter 20, the Internet telephony server 40, and the destination terminal adapter 20 in association with the operation shown in Fig. 2a.

In accordance with the operation shown in Fig. 2a, the origination terminal adapter 20 requests the Internet telephony server 40 to make a calling attempt in response to a calling request from the user of the origination telephone 10 (Step s1). In response to the calling request, the Internet telephony server 40 sends a call including identification information for an Internet telephony drive operation to the destination terminal adapter 20 via the Internet telephony server 40, thereby informing the destination terminal adapter 20 of the request for Internet telephony services from the origination terminal adapter 20 (Step s2). Where the Internet telephony server 40 has no information about the destination terminal adapter 20 registered therein, the calling attempt is made using a telephone number associated with the destination terminal adapter 20 and transmitted from the origination terminal adapter 20. After receiving the call, the destination terminal adapter 20 releases the received call, and then has access to the Internet 30 so that it is connected to the Internet 30. That is, the destination terminal adapter 20 executes an Internet telephony drive operation. In the connected state, the destination terminal adapter 20 transmits, to the Internet telephony server 40, Internet telephony connection information associated with the Internet telephony drive operation (Step s3). Thus, both the origination and destination terminal adapters are connected to the Internet 30. Subsequent procedures are carried out in accordance with Internet telephony control operations conducted between the origination and destination terminal adapters connected to the Internet 30. That is, the Internet telephony server 40 informs the destination terminal adapter 20 of the IP address of the origination terminal adapter 20 (Step s4). The destination terminal adapter 20 identifies an incoming call to be associated therewith, and then informs the Internet telephony server 40 of the reception of the incoming call (Step s5). The destination terminal adapter 20 then informs the Internet telephony server 40 of the fact that it responds to the incoming call, and transmits its IP address to the Internet telephony server 40 (Step s6). Thereafter, the origination and destination terminal adapters 20 sequentially exchange connection signals, acknowledgement signals, and voice signals, in this order (Step s7). The above mentioned calling attempt, that is, the transmission of a call with Internet telephony drive identification information, is a calling attempt, for a general voice call, conducted via an ISDN to which the destination terminal adapter 20 is connected. This calling attempt is carried out using the telephone number of the Internet telephony server 40, that is, the calling party number, user to user information (UUI), or a calling party sub-address of the ISDN. The information is transmitted on the D channel of the ISDN. Where the calling party number, UUI, or calling party sub-address corresponds to that previously stored in the destination terminal adapter 20, the incoming call transmitted from the Internet telephony server 40 is recognized as a calling attempt for Internet telephony services by the destination terminal adapter 20. In this case, the destination terminal adapter 20 carries out a connection to the Internet 30 and an Internet telephony drive operation. In accordance with an embodiment of the present invention, the calling party number is mainly used. However, where the calling attempt is made using UUI, data agreed between the Internet telephony server 40 and the destination terminal adapter 20 may be included in the UUI, as a message for allowing the Internet telephony server 40 to inform of the execution of an Internet telephony drive operation, by virtue of the characteristics of the UUI capable of allowing transmission and reception of a small quantity of data. Meanwhile, the calling party sub-address is an information factor defined by Q.931 of ITU. Where such a calling party sub-address is used, information of 20 bytes or less previously designated is transmitted, along with a call, to the destination terminal adapter. The 20-byte quantity is a maximum transmissible data quantity of the sub-address defined by the specification of the ITU. In accordance with an embodiment of the present invention, a particular number instructing a calling attempt for Internet telephony services is transmitted while being included in the sub-address. In this case, the destination terminal adapter is previously registered with the particular number, and conducts execution of an Internet telephony drive operation in accordance with whether or not a number corresponding to the registered number is received.

Now, the Internet telephony operation of Fig. 2a carried out in the above mentioned system using an ISDN voice call will be described in more detail, with reference to Figs. 3a, 3b, and 3c. Fig. 3a is a flow chart illustrating a control procedure for the origination terminal adapter 20 in accordance with a preferred embodiment of the present invention. Fig. 3b is a flow chart illustrating a control procedure for the Internet telephony server 40 in accordance with a preferred embodiment of the present invention. In addition, Fig. 3c is a flow chart illustrating a control procedure for the destination terminal adapter 20 in accordance with a preferred embodiment of the present invention.

As shown in Fig. 3a, the origination terminal adapter 20, which is in a calling request waiting state at step 3010, periodically determines, at step 3011, whether or not there is a calling request. Where there is a calling request, the origination terminal adapter 20 conducts a connection to the Internet 30 at step 3012. Thereafter, the origination terminal adapter 20 transmits, to the Internet telephony server 40, Internet telephony connection information including its origination IP address and origination and destination telephone numbers. Here, the origination and destination telephone numbers are information associated with a call to be made in response to the calling request whereas the origination IP address and origination telephone number are information used to register the calling party in the Internet telephony server 40. In response to the transmitted information, the origination terminal adapter 20 determines, at step 3014, whether or not the calling request is associated with the Internet telephony server 40. When the calling request is associated with the Internet telephony server 40, a call is generated from the Internet telephony server 40. In this case, at step 3015, the origination telephone generates a calling attempt tone to the user. Thereafter, at step 3016, the origination terminal adapter 20 waits for the reception of a destination IP address and information about the responding status of the destination terminal adapter 20 to the transmission of the call. On the other hand, where it cannot be determined at step 3014 whether or not the Internet telephony server 40 generates a desired call or where it is determined at step 3016 that the destination IP address and responding status information are not received, a general ISDN call processing is executed. In this case, the origination terminal adapter 20 attempts to establish a voice channel via an ISDN corresponding to the destination telephone number transmitted from the origination telephone 10.

When the origination terminal adapter 20 receives the destination IP address and the information about the responding status of the destination terminal adapter 20 to the transmission of the call at step 3016, it generates and processes ring-back tones at step 3017. The origination terminal adapter 20 then determines, at step 3018, whether or not a call connection signal is received from the destination terminal adapter 20. If there is no call connection signal received, the origination terminal adapter 20 continues generation of ring-back tones until a call connection signal is received. When there is a call connection signal received at step 3018, the origination terminal adapter 20 sends a connection acknowledgement signal to the destination terminal adapter 20 in response to the reception of the call connection signal, at step 3019. Subsequently, the origination terminal adapter 20 establishes a voice channel with the destination terminal adapter 20 at step 3020. Through the established voice channel, the origination terminal adapter 20 conducts a processing of transmission and reception of voice signals at step 3021. This status corresponds just to a voice communication status. In this case, the voice channel is a voice channel over the Internet 30. At step 3022, the origination terminal adapter 20 detects whether or not the voice communication between the origination and destination telephones 10 is completed. In response to the completion of the voice communication, the origination terminal adapter 20 conducts a processing for release of the voice channel, at step 3023. At step 3024, the origination terminal adapter 20 then informs the Internet telephony server 40 of release of the Internet connection. That is, the origination terminal adapter 20 requests the Internet telephony server 40 to delete the registered IP address and telephone numbers.

Referring to Fig. 3b, a control procedure for the Internet telephony server 40 is illustrated. In accordance with the control procedure shown in Fig. 3b, the Internet telephony server 40, which is in a waiting state for reception of a calling request at step 3030, periodically determines, at step 3031, whether or not there is a calling request made from the origination terminal adapter 20. When there is a calling request made from the origination terminal adapter 20, the Internet telephony server 40 registers the IP address and telephone number of the origination terminal adapter 20 included in Internet telephony connection information received from the origination terminal adapter 20. Typically, the Internet telephony connection information includes the origination and destination telephone numbers and the origination IP address received from the origination terminal adapter 20. The reason why the registration of the origination IP address and origination telephone number is necessary is that the destination terminal adapter 20 should know the origination IP address and origination telephone number for a subsequent execution of Internet telephony services. At step 3033, the Internet telephony server 40 searches information about registered IP addresses in order to determine whether or not there is a registered IP address corresponding to the destination telephone number transmitted from the origination terminal adapter 20. Simultaneously, the Internet telephony server 40 transmits, to the origination terminal adapter 20, information about the reception of the calling request. At step 3034, the Internet telephony server 40 determines whether or not there is a registered IP address corresponding to the destination telephone number, based on the result of the search. Where there is no registered IP address corresponding to the destination telephone number, the control procedure proceeds to step 3035. At step 3035, the Internet telephony server 40 conducts an operation for transmitting an ISDN voice call to the destination terminal adapter 20, based on the destination telephone number received thereto. This operation is carried out in accordance with the above mentioned step s2 of Fig. 2a. The transmission of the call is conducted via the D channel of the ISDN. That is, the transmission of the call is not carried out via the Internet 30, but carried out via the ISDN. The operation for making the ISDN voice call is carried out, simultaneously with the operation for transmitting Internet telephony drive identification information previously designated through the ISDN. For instance, an ISDN exchange transmits, to the destination terminal adapter 20, the calling party number of the Internet telephony server 40 or information corresponding to the Internet telephony drive identification in response to the transmission of the voice call from the Internet telephony server 40. The destination terminal adapter 20 recognizes the transmitted calling party number as Internet telephony drive identification information. In other words, the Internet telephony drive identification information transmitted to the destination terminal adapter 20 through the ISDN exchange in response to the ISDN calling attempt made by the Internet telephony server 40 is recognized and processed by the destination terminal adapter 20 in the form of information associated with an Internet telephony drive command. The Internet telephony drive identification information is transmitted in the form of a calling party number, a UUI message, or a calling party sub-address. Thus, the above mentioned Internet telephony drive identification information is transmitted in the form of an Internet telephony drive command to the destination terminal adapter 20 via the ISDN. In response to the calling party number, UUI message, or calling party sub-address received, the destination terminal unit 20 conducts an Internet telephony drive operation. Thereafter, at step 3037, the Internet telephony server 40 determines whether or not it receives a destination IP address and Internet telephony drive information transmitted from the destination terminal adapter in response to the transmission of the Internet telephony drive identification information. That is, it is determined whether or not the destination terminal adapter 20 transmits information about an Internet telephony connection and an IP address associated therewith in response to the ISDN voice call. If yes, the Internet telephony server 40 transmits, at step 3038, the registered origination IP address and telephone number of the origination terminal adapter 20 to the destination terminal adapter 20. At step 3039, the Internet telephony server 40 then detects whether or not the destination terminal adapter 20 transmits information about the responding status thereof to the transmission of the call, in response to the transmission at step 3038. If yes, the Internet telephony server 40 transmits, at step 3040, the destination IP address and the responding status information to the origination terminal adapter 20. Then, the Internet telephony server 40 completes its connection arbitrating operation. If necessary, the Internet telephony server 40 checks the establishment of a voice channel between the origination and destination terminal adapters 20 and the status of the established voice channel, at step 3041. Thus, the communication arbitrating operation of the Internet telephony server 40 is completely ended.

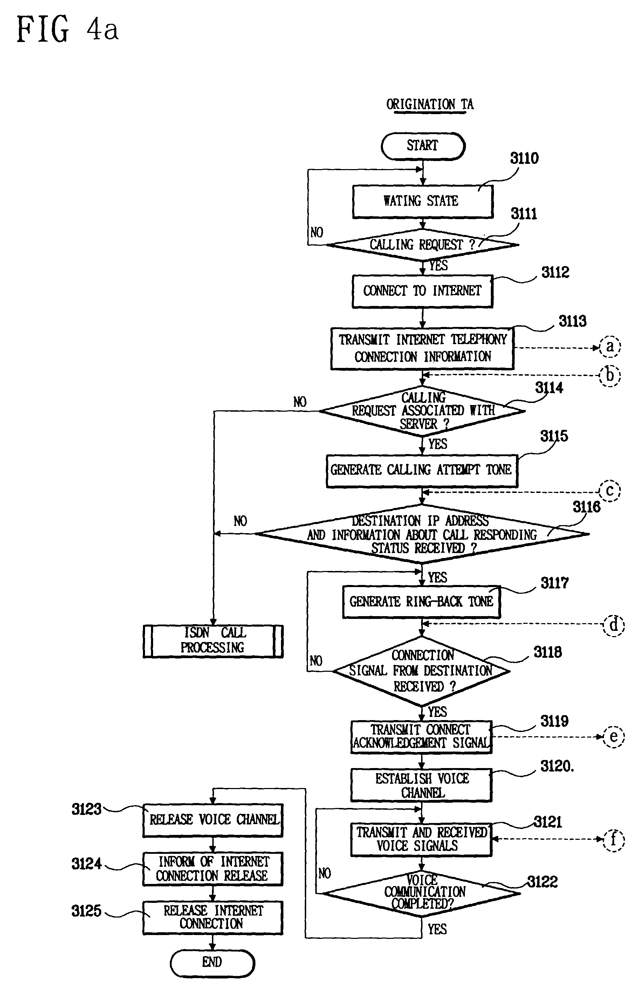

Referring to Fig. 3c, a control procedure for the destination terminal adapter 20 is illustrated. In accordance with the control procedure shown in Fig. 4a, the destination terminal adapter 20, which is in a waiting state for reception of an incoming ISDN voice call at step 3050, periodically determines, at step 3051, whether or not an incoming ISDN voice call is received. When an incoming ISDN voice call is received, the destination terminal adapter 20 then determines, at step 3052, whether or not a calling party number is received. If yes, the destination terminal adapter 20 conducts a decoding process for the received calling party number, at step 3053. Thereafter, at step 3054, it is determined whether or not the received calling party number corresponds to the Internet telephony drive identification information previously registered in the destination terminal adapter 20 in association with Internet telephony services. Where the received calling party number does not correspond to the registered Internet telephony drive identification information, the destination terminal adapter 20 conducts an ISDN call processing operation because the received call corresponds to a general incoming ISDN call. On the other hand, when the received calling party number corresponds to the registered Internet telephony drive identification information, the incoming ISDN call is released at step 3055. Subsequently, the destination terminal adapter 20 sequentially conducts a connection to the Internet 30 and an Internet telephony drive operation at steps 3056 and 3057. At step 3058, the destination terminal adapter 20 transmits the destination IP address and telephone number thereof and Internet telephony drive information to the Internet telephony server 40, which has transmitted the ISDN voice call, via the Internet 30. The destination terminal adapter 20 then determines, at step 3059, whether or not there are an origination IP address and an origination telephone number received thereto, thereby determining the origination. Where there are an origination IP address and an origination telephone number received, the destination terminal adapter 20 generates a ring signal, indicative of a reception of the incoming call, at step 3060. The ring signal from the destination terminal adapter 20 is sent to the telephone connected to the destination terminal adapter 20. That is, the destination telephone rings to inform the user thereof of the reception of the incoming call. At step 3061, the destination terminal adapter 20 transmits, to the Internet telephony server 40, response information to the incoming call. The destination terminal adapter 20 also checks, at step 3062, whether or not the user of the destination telephone hooks off the destination telephone. Where it is checked that the destination telephone is in an off-hook state, the destination terminal adapter 20 transmits a connection signal to the origination terminal adapter 20 at step 3063. Then, the destination terminal adapter 20 detects, at step 3064, whether or not a connection acknowledgement signal transmitted from the origination terminal adapter 20 in response to the connection signal is received. When the connection acknowledgement signal is detected, the destination terminal adapter 20 establishes a voice channel with the origination terminal adapter at step 3065. At step 3066, the destination terminal adapter 20 conducts a processing of transmission and reception of voice signals via the established voice channel. This status of the destination terminal adapter 20 corresponds to a voice communication status with the origination terminal adapter 20. In this case, the voice channel is a voice channel over the Internet 30. At step 3067, the destination terminal adapter 20 detects whether or not the voice communication between the origination and destination telephones 10 is completed. In response to the completion of the voice communication, the destination terminal adapter 20 conducts a processing for release of the voice channel, at step 3068. At step 3069, the destination terminal adapter 20 then informs the Internet telephony server 40 of release of the Internet connection. At step 3070, the destination terminal adapter 20 releases the connection to the Internet 30. As a result, the registration of the destination terminal adapter 20 is released from the Internet telephony server 40.

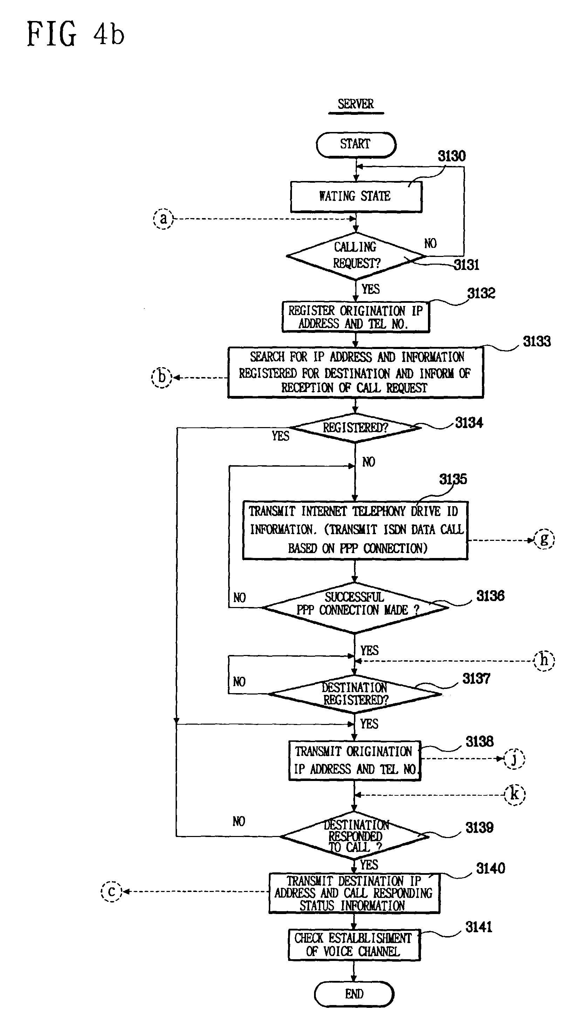

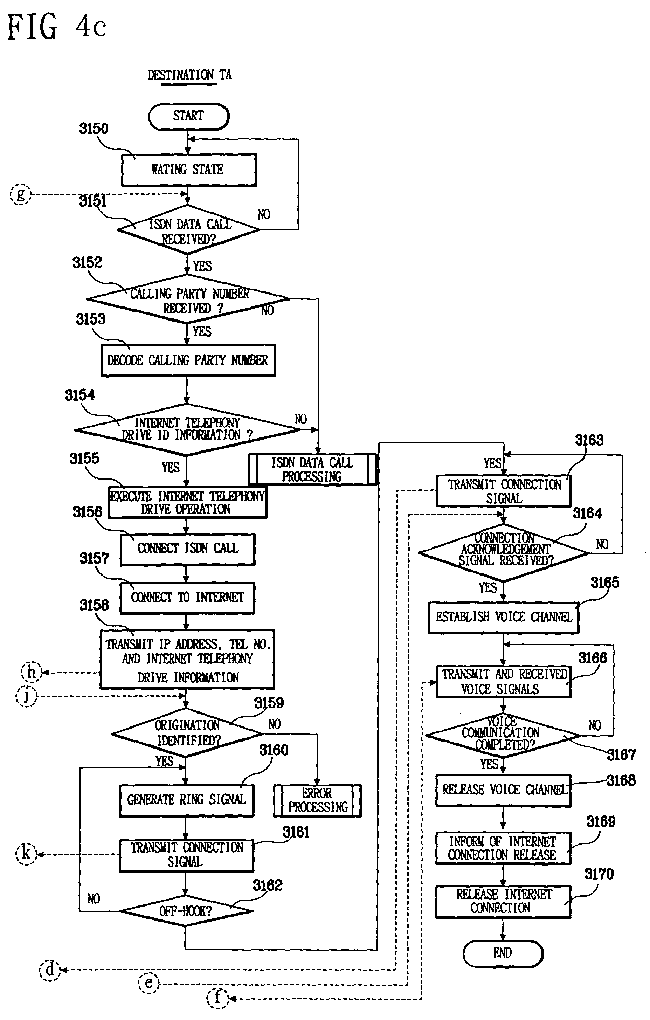

Fig. 2b is a flow chart illustrating an operation of the Internet telephony system using the Internet in accordance with another embodiment of the present invention. Figs. 4a, 4b and 4c are flow charts illustrating respective control procedures for the origination terminal adapter 20, the Internet telephony server 40, and the destination terminal adapter 20 in association with the operation shown in Fig. 2b.

In accordance with the operation shown in Fig. 2b, the origination terminal adapter 20 requests the Internet telephony server 40 to make a calling attempt in response to a calling request from the user of the origination telephone 10. That is, the origination terminal adapter 20 transmits the destination telephone number, origination telephone number, and origination IP address to the Internet telephony server 40. In response to the calling request, the Internet telephony server 40 conducts a calling attempt while informing the origination terminal adapter 20 of the calling attempt. The origination terminal adapter 20 then informs the user of the calling attempt by generating calling attempt tones (Step s11). However, where there is no IP address, corresponding to the destination telephone number, registered in the Internet telephony server 40, this Internet telephony server 40 transmits a call including Internet telephony drive identification information for a PPP connection based on the destination telephone number received from the origination terminal adapter 20, thereby informing the destination terminal adapter 20 of the request for Internet telephony services (Step s12). This is carried out using an ISDN data call. In this case, the destination terminal adapter achieves a PPP connection based on the received ISDN data call, and transmits, to the Internet telephony server 40, Internet telephony connection information along with information associated with an Internet telephony drive operation carried out therein (Step s13). Although the transmission of the data call is illustrated as being carried out via the ISDN in Fig. 2b, this illustration is only to express a physical connection between the Internet telephony server 40 and the destination terminal adapter 20. Actually, the logical connection between the Internet telephony server 40 and the destination terminal adapter 20 is achieved via the Internet 30 in accordance with a PPP protocol, so that the transmission of the call to the destination terminal adapter is achieved via the Internet 30. In this regard, it should be noted that the illustration of Fig. 2b is made for a best understanding of the feature of the present invention, that is, the use of the ISDN data call. Subsequent procedures are carried out in accordance with Internet telephony control operations conducted between the origination and destination terminal adapters connected to the Internet 30. That is, the destination terminal adapter 20 identifies the received call to be associated therewith through a call reception procedure according to the driving of the PPP protocol, and then has access to the Internet 30. Then, the destination terminal adapter 20 informs the Internet telephony server 40 of Internet telephony drive information associated with the Internet telephony drive operation. These procedures are carried at step S13. The Internet telephony server 40 then informs the origination terminal adapter 20 of the fact that the destination terminal adapter 20 responds to the call, along with the IP address transmitted from the destination terminal adapter (Step s14). Also, the Internet telephony server 40 sends the origination IP address and origination telephone number to the destination terminal adapter (Step s15). At this time, the destination terminal adapter 20 generates a ring signal indicative of a reception of the incoming call whereas the origination terminal adapter 20 generates ring-back tones. When the destination user responds to the call by hooking off the destination telephone 10, the destination terminal adapter 20 transmits a connection signal to the origination terminal adapter 20 in accordance with the fact that it is in a state connected to the origination terminal adapter 20. In response to the connection signal, the origination terminal adapter 20 transmits a connection acknowledgement signal to the destination terminal adapter 20. The origination and destination terminal adapters 20 then transmit voice signals to each other, thereby conducting voice communications (Step s16).

Now, the Internet telephony operation of Fig. 2b carried out in the above mentioned system using an ISDN data call in accordance with a PPP protocol will be described in more detail, with reference to Figs. 4a, 4b, and 4c. Fig. 4a is a flow chart illustrating a control procedure for the origination terminal adapter 20 in accordance with a preferred embodiment of the present invention. Fig. 4b is a flow chart illustrating a control procedure for the Internet telephony server 40 in accordance with a preferred embodiment of the present invention. In addition, Fig. 4c is a flow chart illustrating a control procedure for the destination terminal adapter 20 in accordance with a preferred embodiment of the present invention.

As shown in Fig. 4b, the origination terminal adapter 20, which is in a calling request waiting state at step 3110, periodically determines, at step 3111, whether or not there is a calling request. Where there is a calling request, the origination terminal adapter 20 conducts a connection to the Internet 30 at step 3112. Thereafter, the origination terminal adapter 20 transmits, to the Internet telephony server 40, Internet telephony connection information including its origination IP address and origination and destination telephone numbers. Here, the origination and destination telephone numbers are information associated with the call made in response to the calling request whereas the origination IP address and origination telephone number are information used to register the calling party in the Internet telephony server 40. In response to the transmitted information, the origination terminal adapter 20 determines, at step 3114, whether or not the calling request is associated with the Internet telephony server 40. When the calling request is associated with the Internet telephony server 40, a call is generated. That is, a calling attempt tone is sent to the origination telephone at step 3115. Thereafter, at step 3116, the origination terminal adapter 20 waits for the reception of a destination IP address and information about the responding status of the destination terminal adapter 20 to the transmission of the call. Where it cannot be determined at step 3114 whether or not the Internet telephony server 40 transmits a desired call or where it is determined at step 3116 that the destination IP address and responding status information are not received, a general ISDN call processing is executed. In this case, the origination terminal adapter 20 attempts to establish a voice channel via an ISDN corresponding to the destination telephone number transmitted from the origination telephone 10.

When the origination terminal adapter 20 receives the destination IP address and the information about the responding status of the destination terminal adapter 20 to the transmission of the call at step 3116, it generates and processes ring-back tones at step 3117. The origination terminal adapter 20 then determines, at step 3118, whether or not a call connection signal is received from the destination terminal adapter 20. If there is no call connection signal received, the origination terminal adapter 20 continues generation of ring-back tones until a call connection signal is received. When there is a call connection signal received at step 3118, the origination terminal adapter 20 sends a connection acknowledgement signal to the destination terminal adapter 20 in response to the reception of the call connection signal, at step 3119. Subsequently, the origination terminal adapter 20 establishes a voice channel with the destination terminal adapter 20 at step 3120. Through the established voice channel, the origination terminal adapter 20 conducts a processing of transmission and reception of voice signals at step 3121. This status corresponds just to a voice communication status. In this case, the voice channel is a voice channel over the Internet 30. At step 3122, the origination terminal adapter 20 detects whether or not the voice communication between the origination and destination telephones 10 is completed. In response to the completion of the voice communication, the origination terminal adapter 20 conducts a processing for release of the voice channel, at step 3123. At step 3124, the origination terminal adapter 20 then informs the Internet telephony server 40 of release of the Internet connection. That is, the origination terminal adapter 20 requests the Internet telephony server 40 to delete the registered IP address and telephone numbers. The origination terminal adapter 20 then conducts release of the Internet connection at step 3125.

Referring to Fig. 4b, a control procedure for the Internet telephony server 40 is illustrated. In accordance with the control procedure shown in Fig. 4b, the Internet telephony server 40, which is in a waiting state for reception of a calling request at step 3130, periodically determines, at step 3131, whether or not there is a calling request made from the origination terminal adapter 20. When there is a calling request made from the origination terminal adapter 20, the Internet telephony server 40 registers the IP address and telephone number of the origination terminal adapter 20 included in Internet telephony connection information received from the origination terminal adapter 20. Typically, the Internet telephony connection information includes the origination and destination telephone numbers and the origination IP address received from the origination terminal adapter 20. The reason why the registration of the origination IP address and origination telephone number is necessary is that the destination terminal adapter 20 should know those origination IP address and origination telephone number for a subsequent execution of Internet telephony services. At step 3133, the Internet telephony server 40 searches information about registered IP addresses in order to determine whether or not there is a registered IP address corresponding to the destination telephone number transmitted from the origination terminal adapter 20. Simultaneously, the Internet telephony server 40 transmits, to the origination terminal adapter 20, information about the reception of the calling request. At step 3134, the Internet telephony server 40 determines whether or not there is a registered IP address corresponding to the destination telephone number, based on the result of the search. Where there is no registered IP address corresponding to the destination telephone number, the control procedure proceeds to step 3135. At step 3135, the Internet telephony server 40 conducts an operation for transmitting, to the destination terminal adapter 20, a data call for a PPP connection via an ISDN D channel, based on the destination telephone number received thereto. This operation is carried out in accordance with the above mentioned step s12 of Fig. 2b. The above operation seems to be carried out using an ISDN, if it is considered in terms of the establishment of a physical channel. Actually, the Internet connection is obtained in accordance with the driving of a PPP protocol. At step 3135, Internet telephony drive identification information is also transmitted to the destination terminal adapter 20 via the ISDN. This transmission is achieved simultaneously with the calling attempt using the ISDN data call. The Internet telephony drive identification information has the form of a calling party number, a UUI message, or a calling party sub-address. The destination terminal adapter 20 recognizes and processes the transmitted Internet telephony drive identification information as information instructing execution of an Internet telephony drive operation. The recognition and processing procedures of the destination terminal adapter 20 are achieved by determining whether or not the transmitted information corresponds to the Internet telephony drive identification information registered in the destination terminal adapter 20. Thereafter, the Internet telephony server 40 determines, at step 3136, whether or not a successful PPP connection to the destination terminal adapter 20 is made. When it is determined at step 3136 that a successful PPP connection is made, the Internet telephony server 40 determines, at step 3137, whether or not the IP address and telephone number of the destination terminal adapter 20 is registered therein. If yes, the Internet telephony server 40 transmits, at step 3138, the registered origination IP address and telephone number of the origination terminal adapter 20 to the destination terminal adapter 20. At step 3139, the Internet telephony server 40 then detects whether or not the destination terminal adapter 20 transmits information about the responding status thereof to the transmission of the call, in response to the transmission at step 3138. If yes, the Internet telephony server 40 transmits, at step 3140, the destination IP address and the responding status information to the origination terminal adapter 20. Then, the Internet telephony server 40 completes its connection arbitrating operation. If necessary, the Internet telephony server 40 checks the establishment of a voice channel between the origination and destination terminal adapters 20 and the status of the established voice channel, at step 3141. Thus, the communication arbitrating operation of the Internet telephony server 40 is completely ended.

Referring to Fig. 4c, a control procedure for the destination terminal adapter 20 is illustrated. In accordance with the control procedure shown in Fig. 4c, the destination terminal adapter 20, which is in a waiting state for reception of an incoming ISDN data call at step 3150, periodically determines, at step 3151, whether or not an incoming ISDN data call is received. When an incoming ISDN data call is received, the destination terminal adapter 20 then determines, at step 3152, whether or not a calling party number corresponding to the received ISDN data call is received. If yes, the destination terminal adapter 20 conducts a decoding process for the received calling party number, at step 3153. Thereafter, at step 3154, it is determined whether or not the received calling party number corresponds to the Internet telephony drive identification information instructing execution of an Internet telephony drive operation. Where the received calling party number does not correspond to the registered Internet telephony drive identification information, the destination terminal adapter 20 conducts an ISDN call processing operation because the received call corresponds to a general incoming ISDN call. On the other hand, when the received calling party number corresponds to the registered Internet telephony drive identification information, the destination terminal adapter 20 executes an Internet telephony drive operation. Subsequently, the destination terminal adapter 20 carries out an ISDN call connection and an Internet connection in a sequential fashion at steps 3156 and 3157. At step 3158, the destination terminal adapter 20 transmits the destination IP address and telephone number thereof and Internet telephony drive information to the Internet telephony server 40, which has transmitted the ISDN data call, via the Internet 30. The destination terminal adapter 20 then determines, at step 3159, whether or not there are an origination IP address and an origination telephone number received thereto, thereby determining the origination. Where there are an origination IP address and an origination telephone number received, the destination terminal adapter 20 generates a ring signal, indicative of a reception of the incoming call, at step 3160. The ring signal from the destination terminal adapter 20 is sent to the telephone connected to the destination terminal adapter 20. That is, the destination telephone rings to inform the user thereof of the reception of the incoming call. At step 3161, the destination terminal adapter 20 transmits, to the Internet telephony server 40, response information to the incoming call. The destination terminal adapter 20 also checks, at step 3162, whether or not the user of the destination telephone hooks off the destination telephone. Where it is checked that the destination telephone is in an off-hook state, the destination terminal adapter 20 transmits a connection signal to the origination terminal adapter 20 at step 3163. Then, the destination terminal adapter 20 detects, at step 3164, whether or not a connection acknowledgement signal transmitted from the origination terminal adapter 20 in response to the connection signal is received. When the connection acknowledgement signal is detected, the destination terminal adapter 20 establishes a voice channel with the origination terminal adapter at step 3165. At step 3166, the destination terminal adapter 20 conducts a processing of transmission and reception of voice signals via the established voice channel. This status of the destination terminal adapter 20 corresponds to a voice communication status with the origination terminal adapter 20. In this case, the voice channel is a voice channel over the Internet 30. At step 3167, the destination terminal adapter 20 detects whether or not the voice communication between the origination and destination telephones 10 is completed. In response to the completion of the voice communication, the destination terminal adapter 20 conducts a processing for release of the voice channel, at step 3168. At step 3169, the destination terminal adapter 20 then informs the Internet telephony server 40 of release of the Internet connection. At step 3170, the destination terminal adapter 20 releases the connection to the Internet 30. As a result, the registration of the destination terminal adapter 20 is released from the Internet telephony server 40.

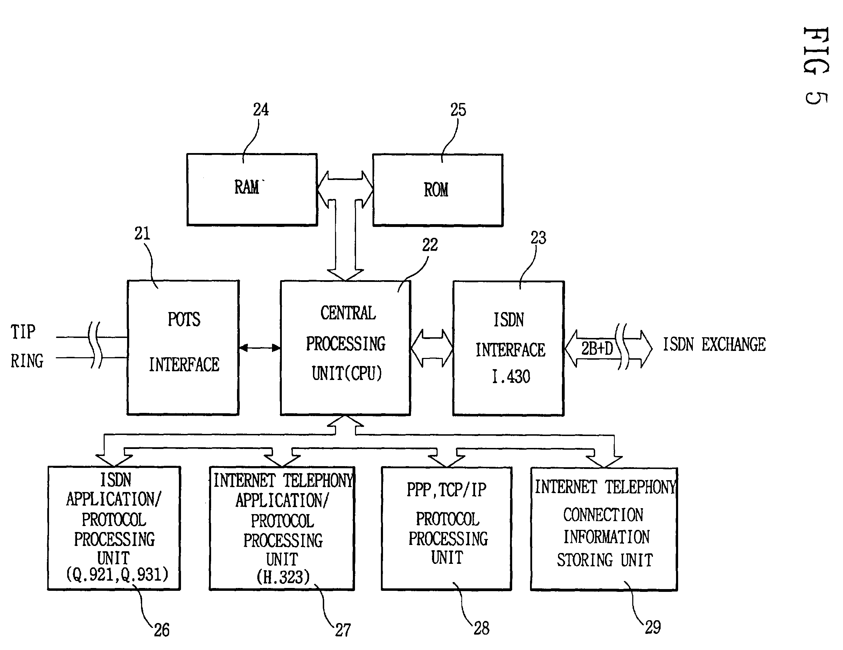

Fig. 5 is a block diagram illustrating an internal configuration of each terminal adapter 20 conducting Internet telephony services in accordance with a preferred embodiment of the present invention.

Referring to Fig. 5, a RAM 24 is illustrated which serves as an operating memory for the terminal adapter 20. In accordance with an embodiment of the present invention, the RAM 24 is a memory for processing transmission and reception data along with data generated during an operation of the terminal adapter 20. This RAM 24 is generally referred to as a volatile memory.

A ROM 25 is adapted to store operating programs for Internet telephony services according to an embodiment of the present invention while storing a variety of data used in those programs. The ROM 25 is implemented by a non-volatile memory. This ROM 25 also stores system information therein.

A plain ordinary telephone (POTS) interface 21 conducts coder/decoder (CODEC) and subscriber line interface circuit (SLIC) functions for a POTS interface, and a control for those functions. The POTS interface 21 serves to interface the connection of a general telephone to the terminal adapter.

A central processing unit 22 serves to control the overall operation of the terminal adapter. The central processing unit 22 also conducts a control for the Internet telephony operation according to an embodiment of the present invention. The central processing unit 22 is implemented by a one-chip microprocessor so that it can rapidly process computation and accumulation functions.

An ISDN interface 23 is connected to an ISDN. The ISDN interface 23 is connected to an ISDN exchange in accordance with a 2B+D channel scheme. The operation of the ISDN interface 23 complies with the I.430 Standard. In accordance with an embodiment of the present invention, the ISDN interface 23 interfaces, at a lower-level layer, the transmission of an ISDN voice call, the transmission of an ISDN data call, and the transmission of a calling party number to the ISDN.

An ISDN application/protocol processing unit 260 serves to process, at an upper-level layer, the transmission of the ISDN voice call, the transmission of the ISDN data call, and the transmission of the calling party number to the ISDN. The operation of the ISDN application/protocol processing unit 260 is defined by the Q.921 and Q.931 Standards.

An Internet telephony application/protocol processing unit 27, which is designed to comply with the H.323 Standard, conducts a processing for the Internet telephony drive operation and Internet telephony operation.

A PPP and TCP/IP protocol processing unit 28 performs a processing associated with an Internet connection. The PPP and TCP/IP protocol processing unit 28 serves as a lower-level layer of the Internet application. By this PPP and TCP/IP protocol processing unit 28, an Internet connection and a data transmission and processing through the Internet connection are carried out.

An Internet telephony connection information storing unit 29 is allocated with origination and destination IP addresses or receives those IP addresses from the terminal adapter and stores them. The Internet telephony connection information storing unit 29 is implemented by a flash memory and a RAM. Based on the stored IP addresses or telephone numbers, Internet telephony services are carried out. If necessary, the Internet telephony connection information storing unit 29 also stores Internet telephony information.

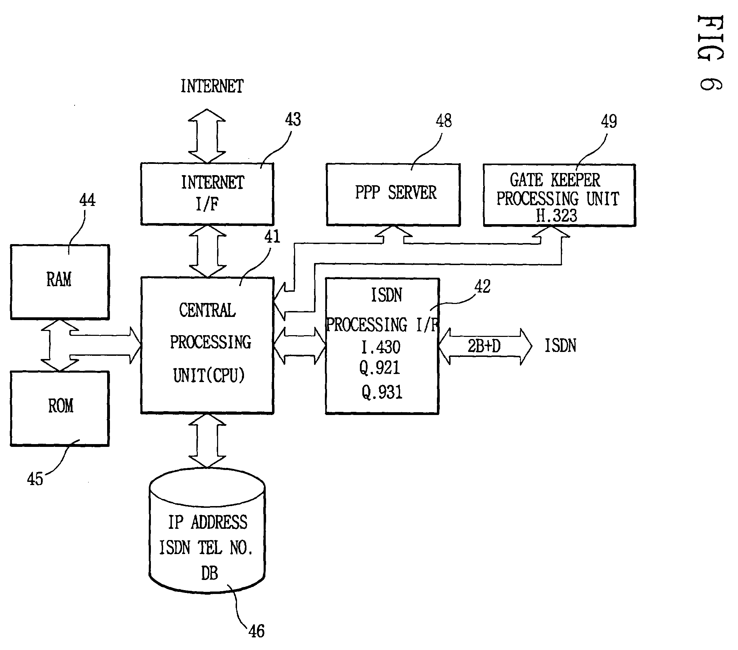

Fig. 6 is a block diagram illustrating an internal configuration of the Internet telephony server 40 conducting Internet telephony services in accordance with a preferred embodiment of the present invention.

Referring to Fig. 6, a RAM 44 is illustrated which serves as an operating memory for the Internet telephony server 40. In accordance with an embodiment of the present invention, the RAM 44 is a memory for processing transmission and reception data along with data generated during an operation of the Internet telephony server 40. This RAM 44 is generally referred to as a volatile memory.

A ROM 45 is adapted to store operating programs for Internet telephony services according to an embodiment of the present invention while storing a variety of data used in those programs. The ROM 45 is implemented by a non-volatile memory. This ROM 25 also stores system operating information therein.

An Internet interface 43 interfaces a connection of the Internet telephony server 40 to the Internet.

A PPP server 48 complies with a PPP protocol for a TCP/IP connection so as to perform transmission and reception of data via the Internet.

A gate keeper processing unit 49 conducts a gate keeper function according to the H.323 Standard. That is, the gate keeper processing unit 49 performs user identification and authorization, call routing, charging, and a conversion between the telephone number and the IP address.

An ISDN processing interface 42 performs operations associated with a connection to an ISDN, transmission and reception of data via the ISDN, and transmission of voice and data calls via the ISDN in accordance with the I.430, Q.921, and Q.931 Standards. These operations are applied for an interconnection between the Internet telephony server 40 and the ISDN.

An IP address and ISDN telephone number database (DB) 46 stores origination and destination IP addresses, and origination and destination ISDN telephone numbers. The stored information may be registered when a call request is made or when a connection to the Internet is to be made. In accordance with an embodiment of the present invention, the database 46 is also stored with identification information for identifying an Internet telephony driving command to be transmitted to the destination terminal adapter.

As apparent from the above description, the present invention provides an Internet telephony system and method for implementing Internet telephony services using ISDN terminal adapters, which are capable of implementing terminal adapters, which allows a PSTN or ISDN to be interconnected with the Internet, allowing those terminal adapters to be used in such a fashion that a destination one of those terminal adapters responds, in real time, to a call attempt requested by an origination one of the terminal adapters and conducted via the Internet, and allowing the origination terminal adapter to conduct, in real time, voice communications with the destination terminal adapter in response to the response of the destination terminal adapter, thereby giving an enhanced convenience to users.

Although the preferred embodiments of the invention have been disclosed for illustrative purposes, those skilled in the art will appreciate that various modifications, additions and substitutions are possible, without departing from the scope and spirit of the invention as disclosed in the accompanying claims.

## Claims

1. An Internet telephony system using an integrated services digital network (ISDN) comprising:
an origination terminal adapter for performing an Internet telephony drive operation in response to a calling request by a user, and transmitting Internet telephony connection information in accordance with the executed Internet telephony drive operation, the origination terminal adapter serving to establish a voice channel with a destination terminal adapter, based on Internet telephony connection information transmitted from the destination terminal adapter in response to the transmission of the Internet telephony connection information from the origination terminal adapter, in a state in which a connection signal from the destination terminal adapter is received by the origination terminal adapter;
an Internet telephony server for searching for a connection of the destination terminal adapter to the Internet in response to the calling request from the origination terminal adapter and the transmission of the Internet telephony connection information from the origination terminal adapter, requesting, via a public telephone network, the destination terminal adapter to execute an Internet telephony drive operation in accordance with the result of the search, and transmitting the Internet telephony connection information from the destination terminal adapter to the origination terminal adapter in accordance with an execution of the Internet telephony drive operation by the destination terminal adapter; and
the destination terminal adapter for executing the Internet telephony drive operation thereof in response to an incoming call from the Internet telephony server transmitted thereto via the public telephone network in accordance with the request for Internet telephony drive operation while transmitting the Internet telephony connection information thereof in accordance with the executed Internet telephony drive operation thereof, the destination terminal adapter serving to establish the voice channel with the origination terminal adapter, based on the Internet telephony connection information transmitted thereto in response to the transmission of the Internet telephony connection information from the destination terminal adapter, in a state in which a connection acknowledgement signal from the origination terminal adapter is received by the destination terminal adapter.

2. The Internet telephony system according to claim 1, wherein the origination terminal adapter transmits a calling attempt tone to a telephone, connected thereto, when it is determined, based on the Internet telephony connection information transmitted from the origination terminal adapter, that the calling request is associated with the Internet telephony server.

3. The Internet telephony system according to claim 1, wherein the Internet telephony server transmits an ISDN voice call to the destination terminal adapter in accordance with a result of the search for the connection of the destination terminal adapter to the Internet while transmitting Internet telephony drive identification information previously stored therein, thereby requesting the destination terminal adapter to execute the Internet telephony drive operation thereof.

4. The Internet telephony system according to claim 3, wherein the Internet telephony drive identification information is a calling party number associated with the ISDN voice call.

5. The Internet telephony system according to claim 3, wherein the Internet telephony drive identification information is a calling party sub-address associated with the ISDN voice call.

6. The Internet telephony system according to claim 3, wherein the Internet telephony drive identification information is user to user information associated with the ISDN voice call.

7. The Internet telephony system according to claim 1, wherein the Internet telephony server transmits an ISDN data call, based on a PPP protocol, to the destination terminal adapter in accordance with a result of the search for the connection of the destination terminal adapter to the Internet while transmitting Internet telephony drive identification information previously stored therein, thereby requesting the destination terminal adapter to execute the Internet telephony drive operation thereof.

8. The Internet telephony system according to claim 3, wherein the Internet telephony drive identification information is a calling party number associated with the ISDN data call.

9. The Internet telephony system according to claim 3, wherein the Internet telephony drive identification information is a calling party sub-address associated with the ISDN data call.

10. The Internet telephony system according to claim 3, wherein the Internet telephony drive identification information is user to user information associated with the ISDN data call.

11. An Internet telephony method in an Internet telephony system including origination and destination terminal adapters connectable to each other via the Internet in accordance with Internet telephony drive operations thereof, and an Internet telephony server adapted to arbitrate connection of a voice channel between the origination and destination terminal adapters, comprising the steps of:
(A) controlling the origination terminal adapter to execute the Internet telephony drive operation thereof in response to a calling request by a user, and to transmit Internet telephony connection information in accordance with the Internet telephony drive operation;
(B) controlling the Internet telephony server to search for a connection of the destination terminal adapter to the Internet in response to the calling request from the origination terminal adapter and the transmission of the Internet telephony connection information from the origination terminal adapter, and to request, via a public telephone network, the destination terminal adapter to execute an Internet telephony drive operation in accordance with the result of the search;
(C) controlling the destination terminal adapter to execute the Internet telephony drive operation thereof in response to an incoming call from the Internet telephony server transmitted thereto via the public telephone network in accordance with the request for Internet telephony drive operation, and to transmit Internet telephony connection information in accordance with the executed Internet telephony drive operation thereof; and
(D) controlling both the origination and destination terminal adapters to establish a voice channel therebetween, based on the Internet telephony connection information exchanged therebetween in accordance with an arbitration of the Internet telephony server, when connection signals are exchanged between the origination and destination terminal adapters in accordance with the arbitration of the Internet telephony server.

12. The Internet telephony method according to claim 11, wherein the step (B) comprises the step of controlling the Internet telephony server to transmit an ISDN voice call and Internet telephony drive identification information, previously stored in the Internet telephony server, to the destination terminal adapter for the request for the Internet telephony drive operation of the destination terminal adapter.

13. The Internet telephony method according to claim 12, wherein the Internet telephony drive identification information is a calling party number associated with the ISDN voice call.

14. The Internet telephony method according to claim 12, wherein the Internet telephony drive identification information is a calling party sub-address associated with the ISDN voice call.

15. The Internet telephony method according to claim 12, wherein the Internet telephony drive identification information is user to user information associated with the ISDN voice call.

16. The Internet telephony method according to claim 11, wherein the step (B) comprises the step of controlling the Internet telephony server to transmit an ISDN data call, based on a PPP protocol, and Internet telephony drive identification information, previously stored in the Internet telephony server, to the destination terminal adapter for the request for the Internet telephony drive operation of the destination terminal adapter.

17. The Internet telephony method according to claim 16, wherein the Internet telephony drive identification information is a calling party number associated with the ISDN data call.

18. The Internet telephony method according to claim 16, wherein the Internet telephony drive identification information is a calling party sub-address associated with the ISDN data call.

19. The Internet telephony method according to claim 16, wherein the Internet telephony drive identification information is user to user information associated with the ISDN data call.

20. The Internet telephony method according to claim 11, wherein the step (C) comprises the steps of: controlling the destination terminal adapter to compare Internet telephony drive identification information, received thereto along with the incoming call, with Internet telephony drive identification information previously stored in the destination terminal adapter; and
controlling the destination terminal adapter to execute the Internet telephony drive operation thereof, thereby conducting a connection to the Internet, and to transmit the Internet telephony connection information thereof.

21. A terminal adapter for Internet telephony services comprising:
an Internet telephony drive unit for executing an Internet telephony drive operation in response to a calling request by a user or an incoming call corresponding to predetermined Internet telephony drive identification information;
an Internet telephony connection information transmitting unit for transmitting Internet telephony connection information of the terminal adapter and Internet telephony connection information associated with a counterpart, to be connected to the terminal adapter for a telecommunication, in accordance with the executed Internet telephony drive operation; and
a voice channel establishing unit for establishing a voice channel based on received Internet telephony connection information of the counterpart.

22. The terminal adapter according to claim 21, further comprising:
an Internet/public telephone network selecting unit for selecting the Internet or a public telephone network, through which the voice channel is to be established, in accordance with whether or not the Internet telephony connection information of the counterpart is received.

23. The terminal adapter according to claim 21, wherein the Internet telephony drive unit drives an Internet telephony drive, included therein, in accordance with whether or not an integrated services digital network (ISDN) voice call is received, and when Internet telephony drive identification information received along with the ISDN voice call corresponds to the predetermined Internet telephony drive identification information.

24. The terminal adapter according to claim 23, wherein the Internet telephony drive identification information is a calling party number associated with the ISDN voice call.

25. The terminal adapter according to claim 23, wherein the Internet telephony drive identification information is a calling party sub-address associated with the ISDN voice call.

26. The terminal adapter according to claim 23, wherein the Internet telephony drive identification information is user to user information associated with the ISDN voice call.

27. The terminal adapter according to claim 21, wherein the Internet telephony drive unit drives an Internet telephony drive, included therein, in accordance with whether or not an integrated services digital network (ISDN) data call based on a PPP calling attempt is received, and when Internet telephony drive identification information received along with the ISDN data call corresponds to the predetermined Internet telephony drive identification information.

28. The terminal adapter according to claim 27, wherein the Internet telephony drive identification information is a calling party number associated with the ISDN data call.

29. The terminal adapter according to claim 27, wherein the Internet telephony drive identification information is a calling party sub-address associated with the ISDN data call.

30. The terminal adapter according to claim 27, wherein the Internet telephony drive identification information is user to user information associated with the ISDN data call.

31. An Internet telephony method in a terminal adapter connectable to a counterpart for a telecommunication via the Internet and a public telephone network, comprising:
an Internet telephony drive operation executing step of executing an Internet telephony drive operation in response to a calling request by a user or an incoming call corresponding to predetermined Internet telephony drive identification information;
an Internet telephony connection information transmitting step of transmitting Internet telephony connection information of the terminal adapter and Internet telephony connection information associated with the counterpart, in accordance with the executed Internet telephony drive operation; and
a voice channel establishing step of establishing a voice channel based on received Internet telephony connection information of the counterpart.

32. The Internet telephony method according to claim 31, further comprising:
an Internet/public telephone network selecting step of selecting the Internet or the public telephone network, through which the voice channel is to be established, in accordance with whether or not the Internet telephony connection information of the counterpart is received.

33. The Internet telephony method according to claim 31, wherein the Internet telephony drive operation executing step further comprises the step of driving an Internet telephony drive, included in the terminal adapter, in accordance with whether or not an integrated services digital network (ISDN) voice call is received, and when Internet telephony drive identification information received along with the ISDN voice call corresponds to the predetermined Internet telephony drive identification information.

34. The Internet telephony method according to claim 33, wherein the Internet telephony drive identification information is a calling party number associated with the ISDN voice call.

35. The Internet telephony method according to claim 33, wherein the Internet telephony drive identification information is a calling party sub-address associated with the ISDN voice call.

36. The Internet telephony method according to claim 33, wherein the Internet telephony drive identification information is user to user information associated with the ISDN voice call.

37. The Internet telephony method according to claim 31, wherein the Internet telephony drive operation executing step further comprises the step of driving an Internet telephony drive, included in the terminal adapter, in accordance with whether or not an integrated services digital network (ISDN) data call based on a PPP protocol is received, and when Internet telephony drive identification information received along with the ISDN data call corresponds to the predetermined Internet telephony drive identification information.

38. The Internet telephony method according to claim 37, wherein the Internet telephony drive identification information is a calling party number associated with the ISDN data call.

39. The Internet telephony method according to claim 37, wherein the Internet telephony drive identification information is a calling party sub-address associated with the ISDN data call.

40. The Internet telephony method according to claim 37, wherein the Internet telephony drive identification information is user to user information associated with the ISDN data call.

41. An Internet telephony server for Internet telephony services comprising:
an Internet telephony connection information receiving unit for receiving a calling request and Internet telephony connection information from an origination terminal adapter in accordance with an Internet telephony drive operation of the origination terminal adapter;
an Internet connection information searching unit for searching for Internet telephony connection information registered for a destination terminal adapter, based on the Internet telephony connection information received from the origination terminal adapter;
an Internet telephony drive operation controlling unit for transmitting a call to the destination terminal adapter via a public telephone network in accordance with a result of the Internet telephony connection information search while transmitting predetermined Internet telephony drive identification information to request execution of an Internet telephony drive operation of the destination terminal adapter; and
a voice channel establishing unit for arbitrating establishment of a voice channel between the origination and destination terminal adapters, based on the Internet telephony connection information received from the origination terminal adapter and the Internet telephony connection information transmitted from the destination terminal adapter executing the Internet telephony drive operation thereof in response to the Internet telephony drive identification information transmitted thereto.

42. The Internet telephony server according to claim 41, wherein the Internet telephony drive operation controlling unit transmits an integrated services digital network (ISDN) voice call to the destination terminal adapter in accordance with the result of the Internet telephony connection information search, along with the predetermined Internet telephony drive identification information for the execution of the Internet telephony drive operation of the destination terminal adapter.

43. The Internet telephony server according to claim 42, wherein the Internet telephony drive identification information is a calling party number associated with the ISDN voice call.

44. The Internet telephony server according to claim 42, wherein the Internet telephony drive identification information is a calling party sub-address associated with the ISDN voice call.

45. The Internet telephony server according to claim 42, wherein the Internet telephony drive identification information is user to user information associated with the ISDN voice call.

46. The Internet telephony server according to claim 41, wherein the Internet telephony drive operation controlling unit transmits an integrated services digital network (ISDN) data call, based on a PPP protocol, to the destination terminal adapter in accordance with the result of the Internet telephony connection information search, along with the predetermined Internet telephony drive identification information for the execution of the Internet telephony drive operation of the destination terminal adapter.

47. The Internet telephony server according to claim 46, wherein the Internet telephony drive identification information is a calling party number associated with the ISDN data call.

48. The Internet telephony server according to claim 46, wherein the Internet telephony drive identification information is a calling party sub-address associated with the ISDN data call.

49. The Internet telephony server according to claim 46, wherein the Internet telephony drive identification information is user to user information associated with the ISDN data call.

50. An Internet telephony method in an Internet telephony server comprising the steps of:
an Internet telephony connection information receiving step of receiving a calling request and Internet telephony connection information from an origination terminal adapter in accordance with an Internet telephony drive operation of the origination terminal adapter;
an Internet connection information searching step of searching for Internet telephony connection information registered for a destination terminal adapter, based on the Internet telephony connection information received from the origination terminal adapter;
an Internet telephony drive operation controlling step of transmitting a call to the destination terminal adapter via a public telephone network in accordance with a result of the Internet telephony connection information search while transmitting predetermined Internet telephony drive identification information to request execution of an Internet telephony drive operation of the destination terminal adapter; and
a voice channel establishing step of arbitrating establishment of a voice channel between the origination and destination terminal adapters, based on the Internet telephony connection information received from the origination terminal adapter and the Internet telephony connection information transmitted from the destination terminal adapter executing the Internet telephony drive operation thereof in response to the Internet telephony drive identification information transmitted thereto.

51. The Internet telephony method according to claim 50, wherein the Internet telephony drive operation controlling step further comprises the step of transmitting an integrated services digital network (ISDN) voice call to the destination terminal adapter in accordance with the result of the Internet telephony connection information search, along with the predetermined Internet telephony drive identification information for the execution of the Internet telephony drive operation of the destination terminal adapter.

52. The Internet telephony method according to claim 51, wherein the Internet telephony drive identification information is a calling party number associated with the ISDN voice call.

53. The Internet telephony method according to claim 51, wherein the Internet telephony drive identification information is a calling party sub-address associated with the ISDN voice call.

54. The Internet telephony method according to claim 51, wherein the Internet telephony drive identification information is user to user information associated with the ISDN voice call.

55. The Internet telephony method according to claim 50, wherein the Internet telephony drive operation controlling step further comprises the step of transmitting an integrated services digital network (ISDN) data call, based on a PPP protocol, to the destination terminal adapter in accordance with the result of the Internet telephony connection information search, along with the predetermined Internet telephony drive identification information for the execution of the Internet telephony drive operation of the destination terminal adapter.

56. The Internet telephony method according to claim 55, wherein the Internet telephony drive identification information is a calling party number associated with the ISDN data call.

57. The Internet telephony method according to claim 55, wherein the Internet telephony drive identification information is a calling party sub-address associated with the ISDN data call.

58. The Internet telephony method according to claim 55, wherein the Internet telephony drive identification information is user to user information associated with the ISDN data call.
